# EUROPEAN PATENT APPLICATION

(11) **EP 2 211 509 A2**
(43) Date of publication of application: **28.07.2010**
(21) Application number: 10000833.3
(22) Date of filing: 27.01.2010
(51) Int. Cl.: H04L 12/56, H04L 12/26, H04L 29/12

(54) **Network communication node**

(30) Priority: 27.01.2009 JP 2009015257
(71) Applicant: Hitachi, Ltd., Chiyoda-ku Tokyo 100-8280 (JP)
(72) Inventor: Oishi, Takumi, Tokyo 100-8220 (JP); Takase, Masayuki, Tokyo 100-8220 (JP); Shinohara, Yasunari, Tokyo 100-8220 (JP)
(74) Representative: Strehl Schübel-Hopf & Partner

(57) **Abstract**

The invention addresses reducing time taken to obtain destination MAC addresses or alleviating the workload of manually setting MAC addresses in physical ports for duplicate PtP connections in WAN. A physical port is provided with functionality that, when transmitting a data frame received by the transmission block in the physical port, copies the content of the source MAC address field in the received data frame to the destination MAC address field, selects a destination MAC address randomly, or specifies a fixed value which has been set beforehand as the destination MAC address. The port is also provided with functionality that performs receive processing on a data frame after being received by the reception block without inspecting the destination MAC address field in the MAC header. Thereby, the time to obtain addresses is reduced or the setting workload is lessened.

## Description

### Background of the invention

The present invention relates to a network communication node pursuant to standards for data communication and, in particular, relates to a physical port configuration in a network communication node that transmits and receives data over a Point to Point connection.

Ethernet (a registered trademark) technology is one of communication technologies for use in a LAN (Local Area Network), i.e., a network that allows nodes connected to it to communicate with each other freely within a geographically limited area such as inside a building (refer to "Mechanisms of IP Networks", Inoue Nobuo, pp. 58-59, 66-73, 76-81, 146-161, 166-169, 178-185, published by Nippon Jitsugyo Publishing Co., Ltd., May, 2006). In 1983, Ethernet technology was standardized as 802.3 CSMA/CD (Carrier Sense Multiple Access with Collision Detection) by IEEE (The Institute of Electrical and Electronics Engineers). One of its features is a bus communication system.

The bus communication (bus topology) refers to a communication system in which one data transmission path is shared by plural nodes. A data frame transmitted from a node is received by all nodes sharing the transmission path. In the bus topology, when two or more nodes transmit respective data frames at the same time, a collision of these data frames might occur, resulting in loss of the data frames. This in turn poses a problem of decreasing the efficiency of transmission of data frames. A form of connection that can avoid this problem is a point-to-point (PtP) connection.

Ethernet technology evolved from a communication rate of 10 Mbps (Megabits per second) in its beginning stage and was standardized to achieve higher rates of 100 Mbps and 1 Gbps (Giga bps), and Ethernet rates are defined up to 10 Gbps in the current standardization. Along with enhanced Ethernet rates, the scope of application of Ethernet has extended from LAN to WAN (Wide Area Network).

### Brief summary of the invention

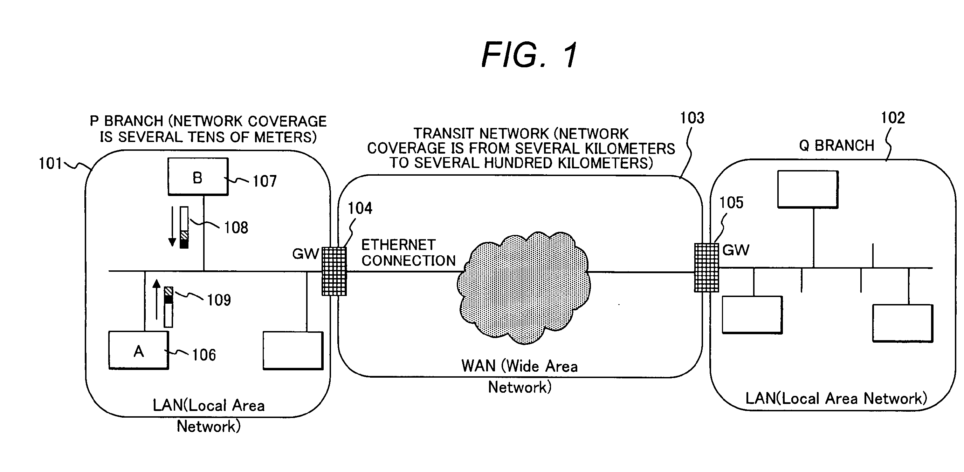

WAN refers to a geographically wider network than LAN. For example, an exemplary WAN 103 is shown in Fig. 1, wherein the WAN 103 connects between a LAN 101 for a P branch with a network coverage of several tens of meters and a LAN 102 for a Q branch having a similar network coverage. Like this example, WAN refers to a network connecting LANs scattered in geographically distant places. Although the WAN 103 connects LANs separated a long distance (from several kilometers to several hundred kilometers) from each other, gateways (GWs) 104, 105 which are proxy nodes for each LAN are provided, and, in general, the WAN only connects between the GWs. If the WAN connects plural GWs in bus topology when connecting plural LANs, time during which a data frame is carried on a transmission path is longer than in LANs, which, therefore, increases the probability that a collision of data frames may occur, and the efficiency of data transmission is lower than in LANs. Thus, a manner is adopted in which relay nodes are deployed between the GWs and a relay node and a GW are connected by a short distance link. For such connection, the above-mentioned PtP connection providing a one-to-one connection between a relay node and a GW is also used, besides the bus topology.

In the PtP connection, because only two nodes are present at both ends of one transmission path, the probability of data frame collision becomes 0 in a full-duplex communication in which transmission and reception can be performed simultaneously. In the case of WAN, a transit network is formed by concatenating multiple relay nodes and the PtP connection is generally used to connect between two of these relay nodes. Internet Protocol (IP) is commonly used for intra-LAN communication and IP is also used for communication between the relay nodes in the WAN connecting the LANs. When IP is used, a unique IP address is assigned to a terminal for communication and a destination MAC address and a source MAC address need to be described in a MAC (Media Access Control) header of each data frame. It has been practiced that unique IP addresses are assigned to the physical ports of the relay nodes in the WAN as well.

However, the assignments of IP addresses give rise to a security problem, e.g., it is possible to make a denial-of-service attack to a communication node from an outside malicious user by using ICMP (Internet Control Message Protocol, refer to http://tools.ietf.org/html/rfc792). Consequently, there are an increasing number of situations where network operators prefer manually setting an IP address of a relay node's physical port for transmitting and receiving data frames rather than assigning an IP address to the port.

This is because, in the case that each physical port has a given IP address, it is possible to obtain a destination MAC address of a PtP link from the destination IP address of the PtP link (MAC address learning) by means of an IP routing protocol, ICMP, and ARP IP (An Ethernet Address Resolution Protocol, refer to http://tools.ietf.org/html/rfc826). In this way, it is thus possible to automatically obtain the destination MAC address of a PtP link of each relay node and route a data frame.

Since PtP links between the relay nodes in the above-mentioned WAN typically have a long distance (from several kilometers to several tens of kilometers), a redundant configuration, i.e., the use of two PtP links between same nodes is often adopted in case a transmission cable failure such as breaking should occur. In the redundant configuration, one working link is used for data communication and the other is used as a protection link to which a switchover will occur in case any failure should occur in the working link. Time t required for this switchover is expressed as follows: given that time elapsed after a failure occurs in a point of a transmission path until the failure has been detected by the relevant relay node is t1, time for switching the physical port used for data transmission in the relay node from working to protection is t2, and time taken to obtain the destination MAC address of the PtP link to be used for data frame transmission at the physical port that has become working now is t3, the total required time t is approximately equal to t1 + t2 + t3. As the switchover time t becomes shorter, a transmission delay will be shorter. It is hence required to reduce the switchover time t. In the Ethernet technology, particularly, reduction of t3 is a challenge.

If IP address assignments are not applied, it is necessary to manually set the destination MAC addresses of all PtP links. A considerable workload is assumed for manually setting the destination MAC addresses of the PtP links for all physical ports of all relay nodes without error. Typically, a single relay node has many physical ports from several tens to over a hundred. Hence, it needs to be confirmed whether the MAC addresses have been set for these ports without error. This confirmation is done by transmitting a data frame in which the destination MAC address of a PtP link was described in a destination MAC address field and confirming whether the destination node of the PtP link is able to receive the data frame. This confirmation work has to be performed for all physical ports.

Furthermore, in a case where a relay node is replaced due to a failure or the like of the node, the MAC addresses of the ports of the replaced node need to be manually set again without error, not only for the replaced node, but also for multiple nodes connected to the replaced node by PtP links, thus resulting in that the workload multiplies many times. That is, if ten relay nodes are connected to the replaced node by PtP links, the work occurs for these ten relay nodes. Alleviating this workload is also a challenge.

Relay nodes constituting a transit network are divided into the following two types: one is edge nodes connecting to plural LANs and the other is core nodes connecting between edge nodes. One core node can be connected to another core node. PtP connections are typically used to connect between a LAN and an edge node, between an edge node and a core node and between core nodes; however, connections in bus topology may be used. Node replacement each time connection changes over between bus topology and PtP connection is economically problematic. Therefore, there is a need for freely changing from PtP connection to bus topology and vice versa. That is, bus topology still needs to be realized, even in a case where it has been achieved to reduce the time taken to obtain destination MAC addresses for PtP connections or even in a case where it has been achieved to alleviate the workload of manually setting MAC addresses.

A first problem addressed by the present invention is to provide a network communication node that makes it possible to reduce the time required to obtain destination MAC addresses, which is characteristic of bus topology.

A second problem addressed by the present invention is to provide a network communication node that makes it possible to alleviate the workload of manually setting MAC addresses for physical ports of a relay node.

Further, a third problem addressed by the present invention is to provide a network communication node that makes it possible to realize bus topology, even in a case where it has been achieved to reduce the time taken to obtain destination MAC addresses for PtP connections, or even in a case where it has been achieved to alleviate the workload of manually setting MAC addresses.

The above first and second problems addressed by the present invention arise due to that, in Ethernet PtP connection, the PtP destination MAC address has to be obtained before transmitting a data frame. Therefore, the first and second problems can be solved by a same solution.

To address the first and second problems, the present invention suggests, as a first solution, that an Ethernet physical port is provided with a unit that, when transmitting a data frame, copies the content of a source MAC address field to a destination MAC address field in the data frame, a unit that selects a destination MAC address randomly, or a unit that specifies a fixed value which has been set beforehand as a destination MAC address. In addition, the port is also provided with a unit that performs receive processing on a data frame after being received without inspecting the destination MAC address field in the MAC header, that is, without learning the MAC address.

Alternatively, as a second solution to address the first and second problems, an Ethernet physical port is provided with a unit that transmits an Ethernet test frame in which its own MAC address has been described in the source MAC address, after a connection of the physical port with a physical port of a PtP destination node is initiated or periodically. Additionally, the port is provided with a unit that, upon receiving the Ethernet test frame, extracts a MAC address from the source MAC address field in the frame. The port is also provided with a MAC address table to use the MAC address as the PtP destination MAC address whenever transmitting a data frame, until the PtP connection is disconnected.

To address the third problem, the present invention further suggests that an Ethernet physical port is provided with a switching unit to enable or disable a destination MAC address search function, when transmitting a data frame. The port is also provided with a switching unit to enable or disable a receive filtering function that compares a MAC address described in the destination MAC address field in the MAC header to the pre-assigned MAC address. The port is further provided with a switching interface via which the two switching units can be controlled from a control server.

According to the present invention, it would be possible to reduce the time required for working/protection switchover in a redundant configuration of duplicate PtP links.

When PtP connections between nodes are set up, there will be no need for the work of manually setting destination MAC addresses in physical ports for the PtP connections.

Furthermore, it would be possible to provide an Ethernet communication node that is interconnectable with a node for which a typical Ethernet technology was applied in bus topology, while achieving the above two effects in terms of PtP connection.

### Brief description of the drawings

Exemplary embodiments of the present invention will be described on the following figures, wherein:
Fig. 1 is a diagram to explain a relationship between LAN and WAN;
Fig. 2 is a diagram to explain an example of a network architecture;
Fig. 3 is a diagram illustrating examples of formats of data frames carried over the network;
Fig. 4 is a diagram showing an example of a hardware configuration of a label switching node;
Fig. 5 is a diagram showing an example of a label switched path setup in a label switching node;
Fig. 6 is a diagram showing an example of a redundant configuration with duplicate PtP links between label switching nodes;
Fig. 7 is a diagram showing a configuration of a typical Ethernet communication node;
Fig. 8 is a diagram illustrating an example of a MAC address table included in the configuration of Fig. 7;
Fig. 9 is a diagram illustrating an example of an egress port search table included in the configuration of Fig. 7;
Fig. 10 is a diagram showing a configuration of an Ethernet communication node pertaining to a first embodiment;
Fig. 11 is a diagram showing a configuration of an Ethernet communication node pertaining to a second embodiment;
Fig. 12 is a diagram illustrating an example of a MAC address table included in the configuration of the Ethernet communication node pertaining to the second embodiment;
Fig. 13 is a diagram showing a configuration of an Ethernet communication node pertaining to a third embodiment;
Fig. 14 is a flowchart to explain a procedure of Ethernet frame transmit processing pertaining to the first embodiment;
Fig. 15 is a flowchart to explain a procedure of frame receive processing pertaining to the first embodiment.
Fig. 16 is a flowchart to explain search disable setting pertaining to the third embodiment;
Fig. 17 is a flowchart to explain search enable setting pertaining to the third embodiment;
Fig. 18 is a flowchart to explain filtering disable setting pertaining to the third embodiment; and
Fig. 19 is a flowchart to explain filtering enable setting pertaining to the third embodiment.

### Detailed description of the invention

Embodiments of the present invention will hereinafter be described in detail, using the drawings. It should be noted that, in the following description, a programmed process that is executed by a processor (Central Processing Unit: CPU) in an interface (IF) card or the like may be referred to as a "function", "block", or "unit".

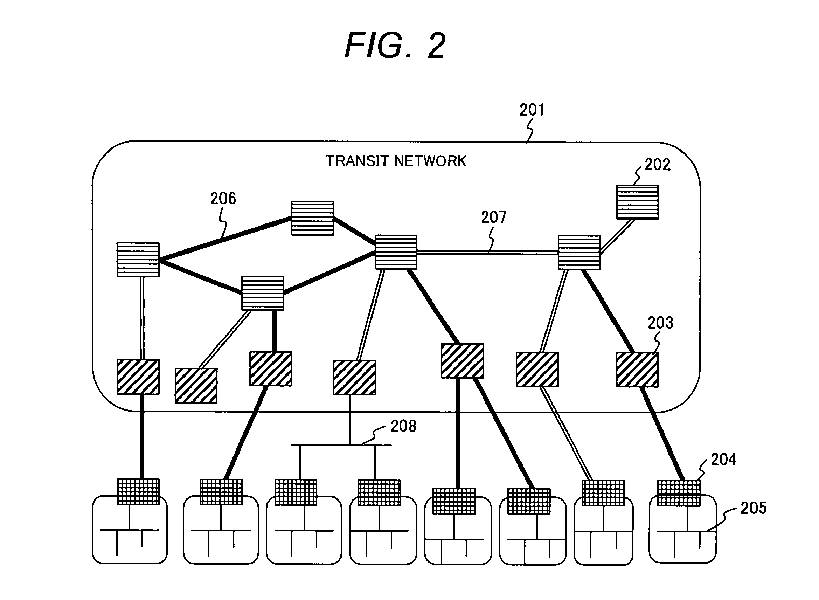

Fig. 2 is a diagram of a network architecture in which the embodiments are assumed to be implemented. GWs 204 which are proxies for LANs 205 are connected via a transit network 201. The transit network 201 is composed of edge nodes 203 to which the GWs 204 are linked respectively and core nodes 202 which connect between the edge nodes 203. The GWs 204 and the edge nodes 203 are respectively connected in a bus topology 208 or by PtP connections 206. To connect between an edge node and a core node or between core nodes, PtP connections 206, some of which are duplicate PtP links 207, are used. The present invention relates to the PtP connections 206 and duplicate PtP links 207 between an edge node 203 and a core node 202 and between core nodes 202.

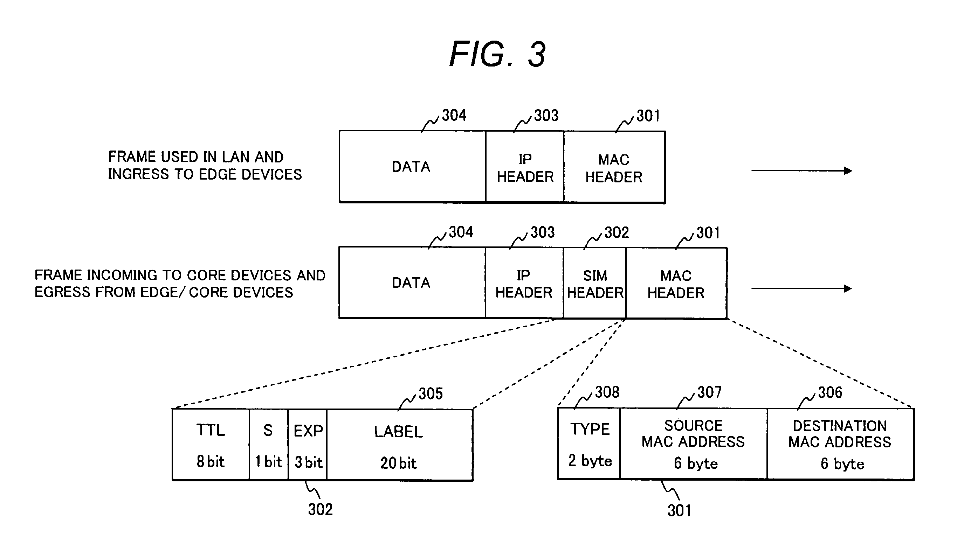

Fig. 3 illustrates a frame format which is used in a LAN and for communication between a GW and an edge node and a frame format which is used for communication between an edge node and a core node or between core nodes. A shim header 302 includes a label 305 and this header is attached or removed at an edge node. A core node uses this label 305 instead of a destination IP address to select a transmitting port. In Fig. 3, referential numeral 301 denotes a MAC header; 303 denotes an IP header; 304 denotes data; 306 denotes a destination MAC address; and 307 denotes a source MAC address.

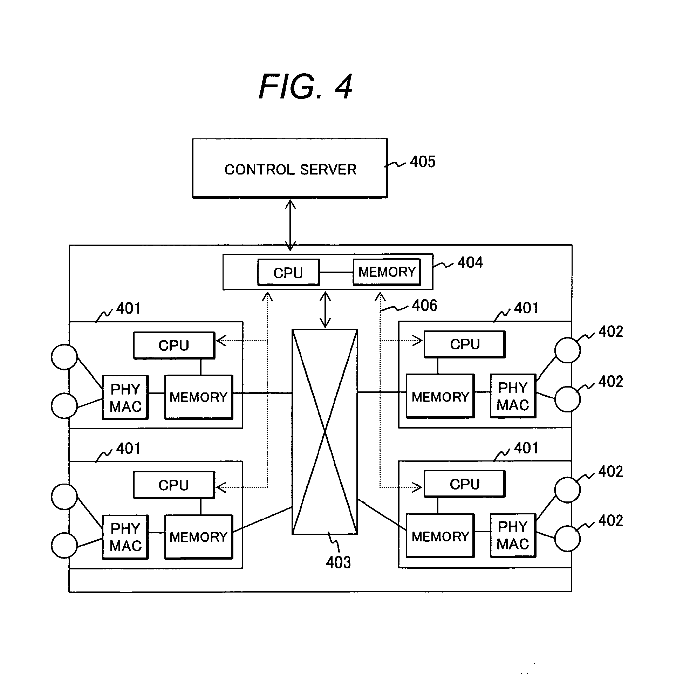

Fig. 4 is a diagram showing a concrete configuration of an edge node 203 or a core node 202. The node is composed of a set of IF cards 401, physical ports 402 included in the IF cards, an internal switch 403, and a control card which communicates with an external control server 405 and controls the IF cards 401 and the internal switch 403. An IF card 401 is composed of a Central Processing Unit (CPU) which functions as a processor, a memory in which tables and data are stored, and PHY/MAC serving as a physical port. PHY is a physical layer transceiver and performs Ethernet frame processing which will be described later. MAC is a media access controller pursuant to the IEEE 802.3 standard. The CPU within an IF card 401 receives a command from the control server 405 via the control card 404 and executes various programmed processes. Similarly, the internal switch 403 is also controlled by the control server 405 via the control card 404.

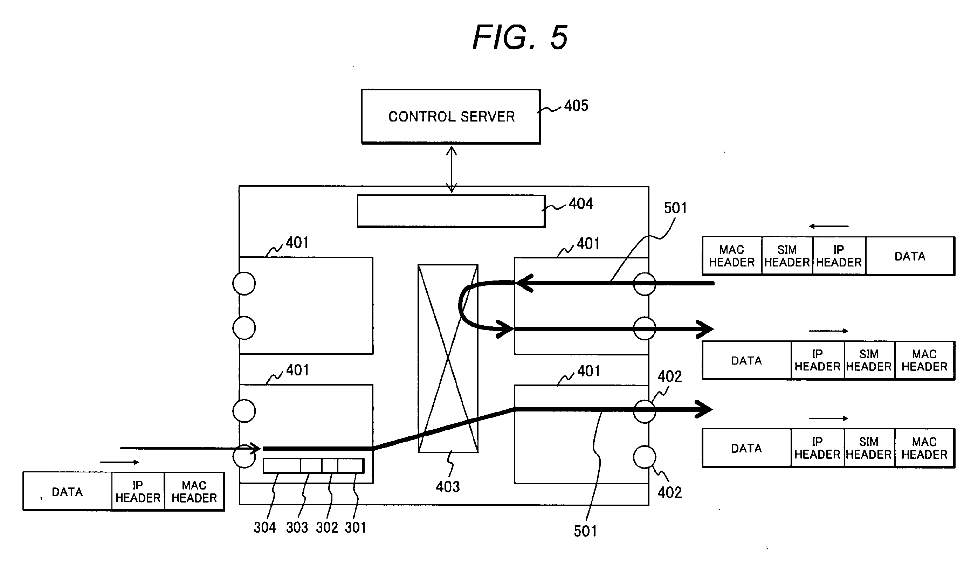

Fig. 5 illustrates an example to explain how a label switched path is set up in an edge node, wherein referential numeral 501 denotes a label switched path. Data frame formats incoming to the edge node 203 are also shown. There are two types of data frames incoming to the edge node: a normal Ethernet frame and an MPLS (Muli-Protocol Label Switching) frame in which a shim header is added. If an Ethernet frame arrives at a physical port of an IF card, it is converted to an MPLS frame in the IF card and then the MPLS frame is handled in the edge node to be forwarded. If an MPLS frame arrives at a physical port of an IF card, it is handled as such in the edge node to be forwards as the MPLS frame.

The internal switch 403 refers to the label 305 in the shim header 302 of an MPLS frame and forwards the MPLS frame to an egress physical port. The egress physical port determines whether to transmit the frame as the MPLS frame or to convert it to an Ethernet frame depending on the destination node and then transmits the data frame. For a core node 202, both incoming and outgoing frames are MPLS frames; others are the same as for an edge node 203. In the subsequent description, all nodes including an internal switch that forwards an MPLS frame by referring to its label may collectively be referred to as label switching nodes.

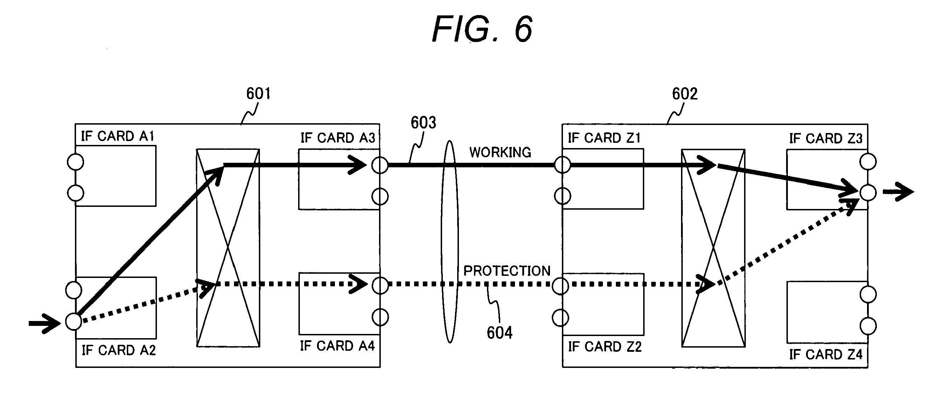

Fig. 6 is a diagram of node-to-node PtP connection of a redundant configuration employing duplicate PtP links between the edge node shown in Fig. 5 and a core node or between core nodes. In Fig. 6, two PtP links are set up between IF cards A3, A4 of a label switching node A 601 and IF cards Z1, Z2 of a label switching node Z 602. Normally, communication is performed through a working path 603 (denoted by a solid line) between an IF card A3 of the label switching node A 601 and an IF card Z1 of the label switching node Z 602. In case a failure should occur, for example, the cable connecting the nodes has been broken; the communication path is switched over to a protection path 604 (denoted by a dotted line). By this switchover function, it is possible to continue communication without disconnection even if a failure occurs. A typical switchover procedure will be described below.

In Fig. 6, two label switched paths are set up from an IF card A2: one to an IF card A3 and the other to an IF card A4. A data frame arrived at the IF card A2 is forwarded to the internal switch. The internal switch copies the data frame and forwards one data frame to the IF card A3 and the other frame to the IF card A4. Each IF card A3, A4 is informed about whether it is the working side or protection side from the control card omitted from Fig. 6. The working-side IF card performs normal transmit processing for the data frame received, whereas the protection-side IF card discards the data frame received. Once the working-side IF card A3 has detected a failure, it promptly notifies the control card of the failure occurrence. The control card promptly instructs the protection-side IF card A4 to start data frame transmit processing. On the instant, the protection-side IF card A4 instructed so from the control card starts the transmit processing for data frames which were discarded until that time. In this switching process, given that time elapsed after a failure actually occurs until the working-side IF card A3 has detected the failure is t1, time elapsed after the working-side IF card A3 notifies the control card of the failure until the control card has instructed the protection-side IF card A4 to start data frame transmission is t2, and time elapsed until the instructed IF card A4 has actually transmitted a data frame from its physical port is t3, switchover time t equals to t1 + t2 + t3. As already indicated, reduction of t3 is a challenge in the case of Ethernet.

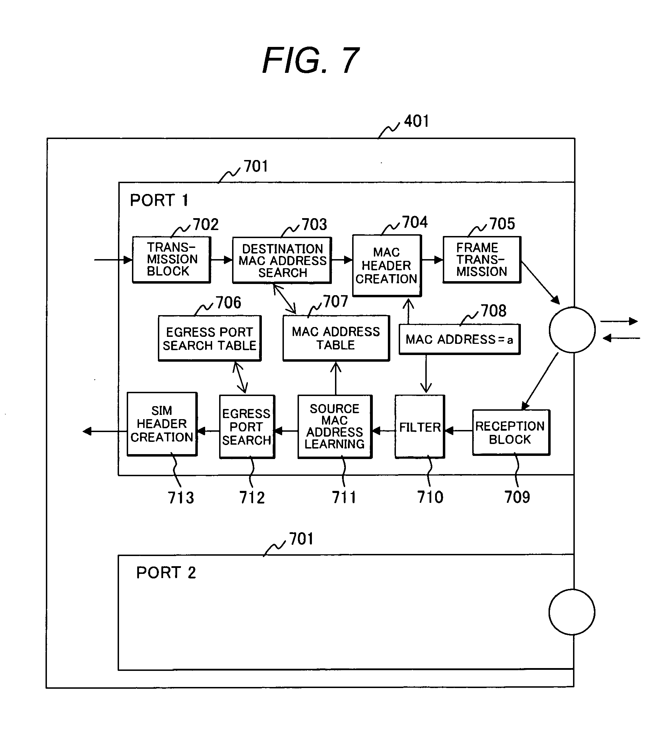

Fig. 7 is a diagram showing a logical configuration of a typical IF card and each physical port employed in an edge node or a core node. As shown in Fig. 4, plural IF cards 401 exist in the node and plural physical ports 701 exist within one IF card 401. In general, the plural IF cards are interconnected via the internal switch 403 and it is possible to transfer data frames between two physical ports which belong to different IF cards. Within one physical port 701, data frame transmit processing and receive processing are performed in a parallel manner. In Fig. 7, the transmit processing proceeds from left to right and the receive processing proceeds from right to left. Individual blocks within the port 701 correspond to logical functions and the like of each port. Data received by a transmission block 702 is processed such that a destination MAC address retrieved from a MAC address table 707 by a destination MAC address search function (unit) 703 and a source MAC address-a 708 are added to the data at MAC header creation 704 and the data frame is transmitted by frame transmission 705. Data received by a reception block 709 is filtered by a filter 710 and undergoes address learning by a source MAC address learning function (unit) 711. The result of the address learning is reflected in the MAC address table 707. An egress port is retrieved from an egress port search table 706 by an egress port search function (unit) 712 and a shim header is crated by a shim header creation function (unit) 713. And the data frame is forwarded to the internal switch 403. The egress port search table 706 and the MAC address table 707 are stored in the memory.

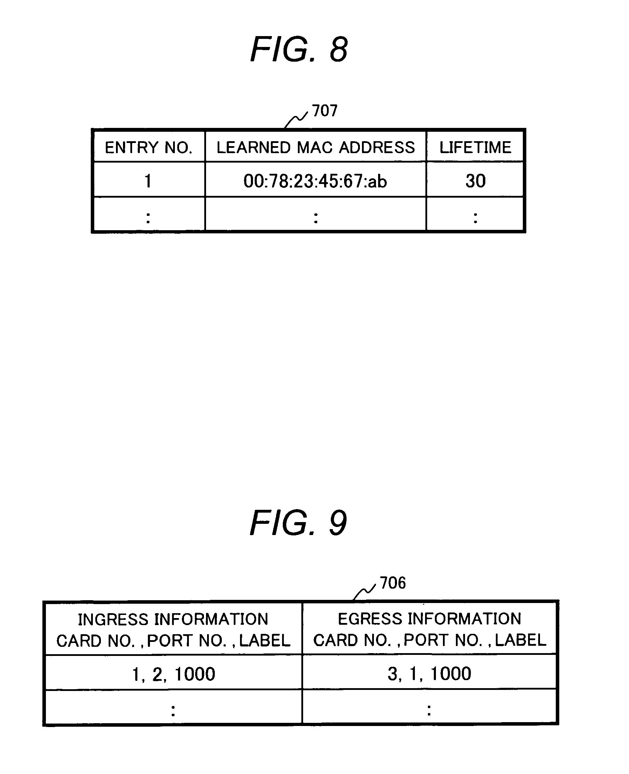

Fig. 8 illustrates an example of the MAC address table 707. The table has a MAC address column and a lifetime column and a MAC address and its lifetime are stored for each entry number in these columns. The MAC address is deleted from the table after the time assigned in the lifetime column has elapsed after the address was registered in the table 707

Fig. 9 illustrates an example of the egress port search table 706. Ingress information in the search table 706 indicates an IF card number and a physical port number at which a data frame was received and a label extracted from the frame. They are used as a search key to retrieve egress information from the table. Egress information indicates an IF card number and a physical port number from which the data frame is to be transmitted and a label to be assigned to the data frame. It is assumed that these ingress information and egress information are set beforehand in each column of the table 706. Usually, an operator who manages the transit network manually enters such information.

The network architecture in which the embodiments are assumed to be implemented has been described above. In the following, respective embodiments will be described.

### First Embodiment

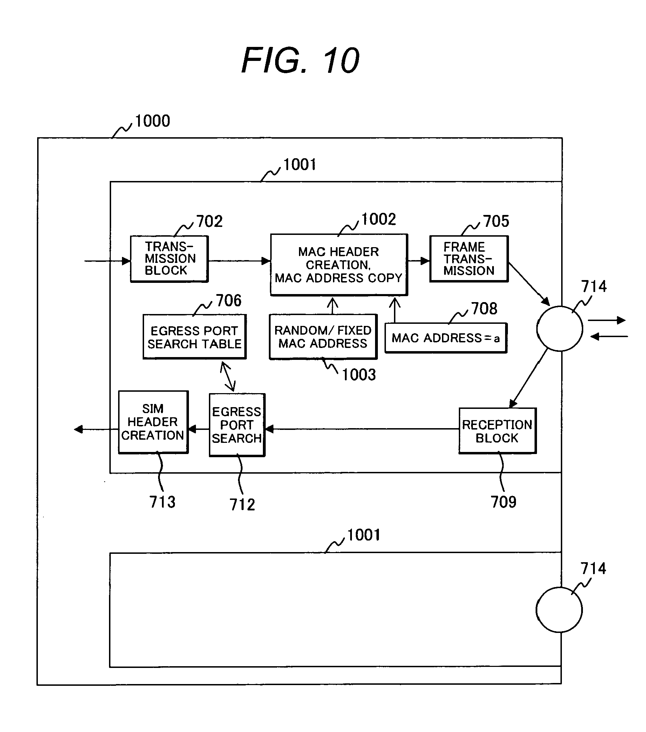

Fig. 10 is a diagram showing a configuration of an IF card and a physical port in a label switching node according to a first embodiment. Referential numeral 1000 corresponds to an IF card A3 shown in Fig. 6 and referential numeral 1001 denotes logical functionality of a port of the IF card. When a data frame arrives at the transmission block 702, a MAC header creation, MAC address copy function (unit) 1002 creates a MAC header or copies the MAC address in the data frame. In the related art node, as described with regard to Fig. 7, the MAC header creation function (unit) 704 sets a MAC address retrieved from the MAC address table 707 in the destination MAC address field. In the present embodiment, the MAC header creation, MAC address copy function (unit) 1002 may set a MAC address which is randomly assigned for each data frame or set one fixed MAC address. Alternatively, it may copy the content of the source MAC address field in the received data frame to the destination MAC address field. For this purpose, a random/fixed MAC address function (unit) 1003 has a function to generate a random MAC address or a function to store a fixed MAC address. Then, the frame transmission block 705 sets a pre-assigned source MAC address-a 708 in the source MAC address field and transmits the data frame from an interface port 714.

For receive processing, when a data frame arrives at the reception block 709 from the interface port 714, a label is extracted from the shim header field of the received data frame at egress port search 712. Using this label as well as the IF card number and the physical port number as a search key, the egress port search table 706 is searched. The shim header creation function (unit) 713 writes a label thus retrieved into a label field in the shim header of the data frame and transfers the data frame to a physical port identified by the thus retrieved IF card number and physical port number via the internal switch. At this time, no change is made to the destination MAC address and the source MAC address. That is, in the present embodiment, filtering and source MAC address learning are not performed, unlike the configuration shown in Fig. 7.

As already described, in the related art node, a MAC address serves to identify a node and the receiver determines whether the received data frame is addressed to it by filtering performed by the filter 710. The filtering checks whether the destination MAC address matches the receiver's MAC address. However, since only one destination can be identified in a PtP connection, the receiver can assume that all received data frames are addressed to it. Thus, the receiver can accept all received data frames without filtering them. However, there is a possibility that the destination node (peer) of the PtP link may transmit an irrelevant data frame erroneously. In that event, the receiver will accept a data frame that must not be accepted.

Here, the irrelevant data frame refers to a data frame without a predetermined label for the label switched path which has been set up beforehand. That is, data frames in which a label other than the predetermined label for the label switched path which has been set up beforehand is set in the label filed in the shim header are irrelevant and these data frames are to be discarded. In the present embodiment, no egress ports for these irrelevant data frames can be retrieved by searching the egress port search table and, therefore, these frames are discarded at the egress port search 712. Thus, there is no problem in that the receiver accepts all received data frames without checking whether the destination MAC address matches the receiver's MAC address by filtering.

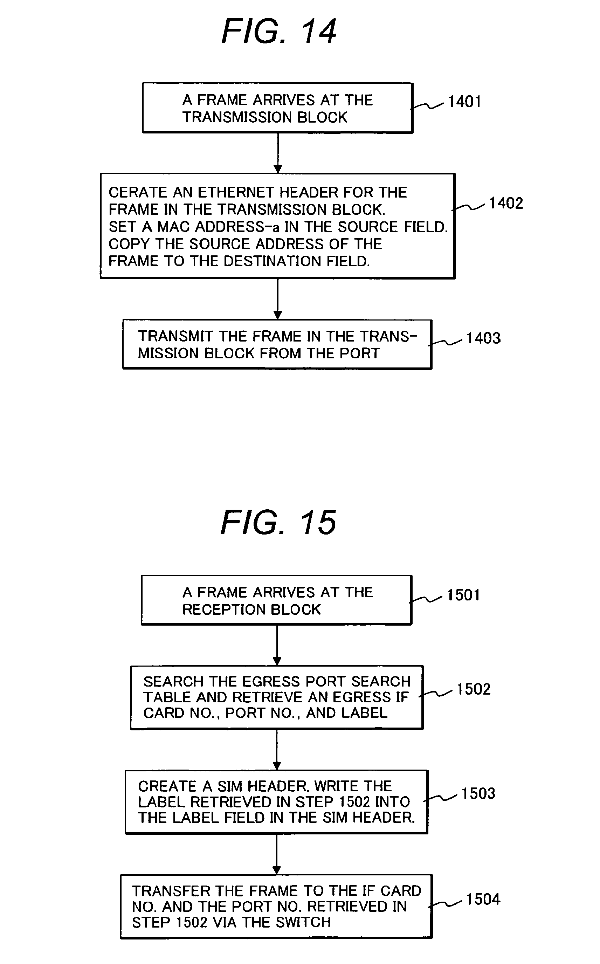

Fig. 14 is a flowchart illustrating an example of a procedure of Ethernet frame transmit processing according to the configuration of the present embodiment. In this example, the content of the source MAC address field in a received data frame is copied to the destination MAC address field. When a data frame arrives at the transmission block 702 (1401), the transmit processing creates an Ethernet header of the frame and sets the MAC address value-a 708 in the source MAC address field. Then, the transmit processing copies address data contained in the source MAC address field to the destination MAC address field by using the MAC address copy function in the block 1002 (1402). Finally, the transmit processing transmits the data frame from the interface port (1403). The above process is performed for each data frame. Instead of copying address data contained in the source MAC address field to the destination MAC address filed, the transmit processing may set a fixed MAC address which has been set beforehand or a randomly generated MAC address in the destination field with the random/fixed MAC address function 1003.

Fig. 15 is a flowchart of a procedure of Ethernet frame receive processing according to the configuration of the present embodiment. When a data frame arrives at the reception block 709 (1501), a label is extracted from the shim header filed of the data frame (1502). Using this label as well as the IF card number and the physical port number as a search key, the receive processing searches the egress port search table 706. The receive processing writes a label thus retrieved from the table into the label field in the shim header (1503) and transfers the data frame to a physical port identified by the thus retrieved IF card number and physical port number via the internal switch (1504). At this time, no change is made to the destination MAC address and the source MAC address.

The first embodiment described above has an advantageous effect as will be discussed below. In the configuration of Fig. 7, the MAC address table 707 is referred to in the transmit processing. Duplicate PtP connection is formed of an working link over which data frames are communicated and a protection link over which no data frames are communicated. Because no data frames are communicated on the protection link, source MAC address learning is not performed in a protection IF card and the associated MAC address table is empty. Therefore, just upon occurrence of working/protection switchover between the duplicate links, the MAC address table in a new working (old protection) IF card is empty. Consequently, a problem associated with the configuration of Fig. 7 is that data frame transmission is delayed until source MAC address learning is completed in the receive processing and any MAC address is registered in the MAC address table. This delay time is included in the above-mentioned t3. In the present embodiment, because of the configuration in which the MAC address table is not referred to in the transmit processing, t3 can be reduced.

### Second Embodiment

Next, a second embodiment is described which solves the above problem in the case that the MAC address table is referred to.

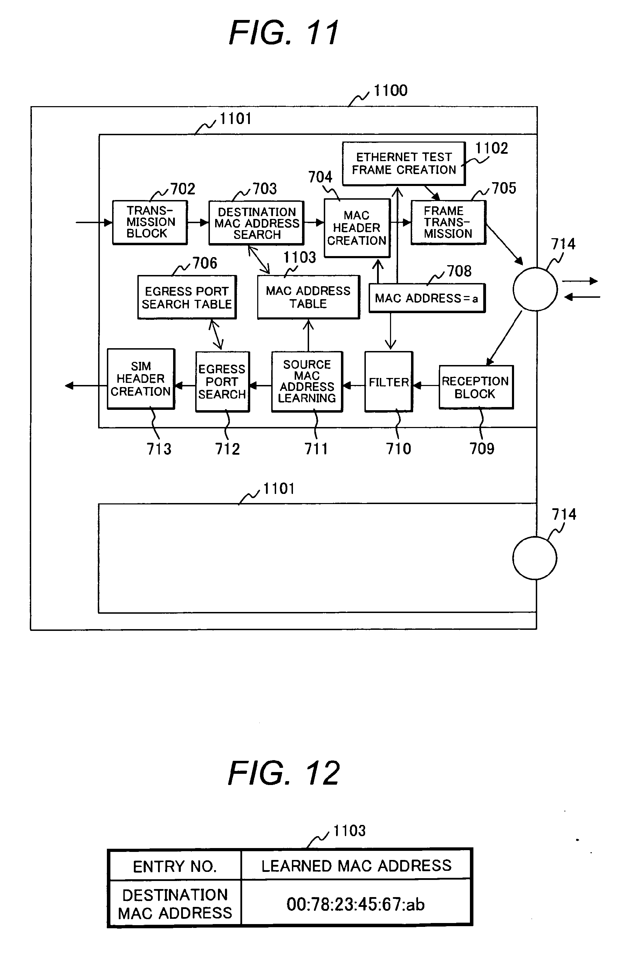

Fig. 11 is a diagram showing a configuration of an IF card and a physical port according to the second embodiment. As for the transmit processing, this configuration includes an Ethernet test frame generation function 1102 in addition to the typical transmit processing. This function generates an Ethernet test frame in which a broadcast MAC address defined in an Ethernet standard is used as the destination MAC address and a pre-assigned MAC address-a 708 is used as the source MAC address. The node of the second embodiment also has a function of monitoring the status of the interface port 714 and transmitting a generated Ethernet test frame from the interface port 714 once a connection with the PtP destination has been initiated. Alternatively, the present node has a function of periodically transmitting a generated Ethernet test frame from the interface port 714 after a connection with the PtP destination is initiated until it is disconnected.

This function is implemented by the CPU which is the processor in the IF card 401 and PHY/MAC serving as a physical port shown in Fig. 4. That is, the PHY/MAC serving as a physical port watches for an electric signal carried over the Ethernet cable. When the port transits into a state enabling electric signal communication with the destination node, "connection is initiated". Conversely, when the port transits into a state disabling electric signal communication with the destination node, the connection is "disconnected". The CPU monitors this PHY/MAC status and activates transmission of an Ethernet Test frame upon detecting the initiation of the connection with the PtP destination.

When duplicate PtP links are set up, the above functions of the node configured in the present embodiment allow communication of an Ethernet test frame over the protection link on which no data frames are transmitted. Through the receive processing of an Ethernet test frame, the receiver can learn the source MAC address and register the MAC address in the MAC address table 1103. Hence, the MAC address of the PtP destination is already registered in the MAC address table 1103 upon working/protection switchover between duplicate links. In the present embodiment as well, the problem that data frame transmission is delayed upon working/protection switchover between duplicate links is resolved.

Fig. 12 illustrates an example of the MAC address table 1103 included in Fig. 11. Only one MAC address learned is set in the MAC address table 1103 and this table does not have the lifetime column existing in the MAC address table 707 shown in Fig. 8. It is needless to say that the MAC address in this table 1103 has been leaned before working/protection switchover between duplicate links.

### Third Embodiment

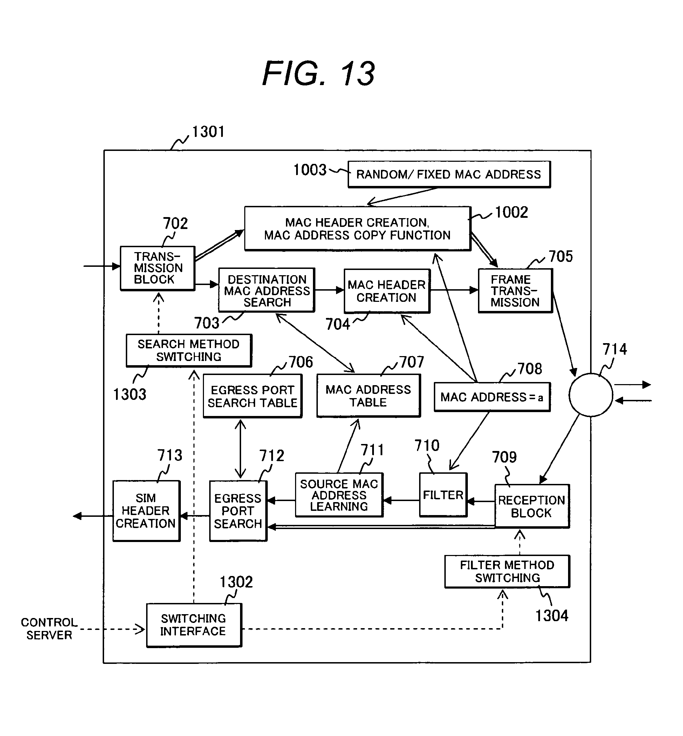

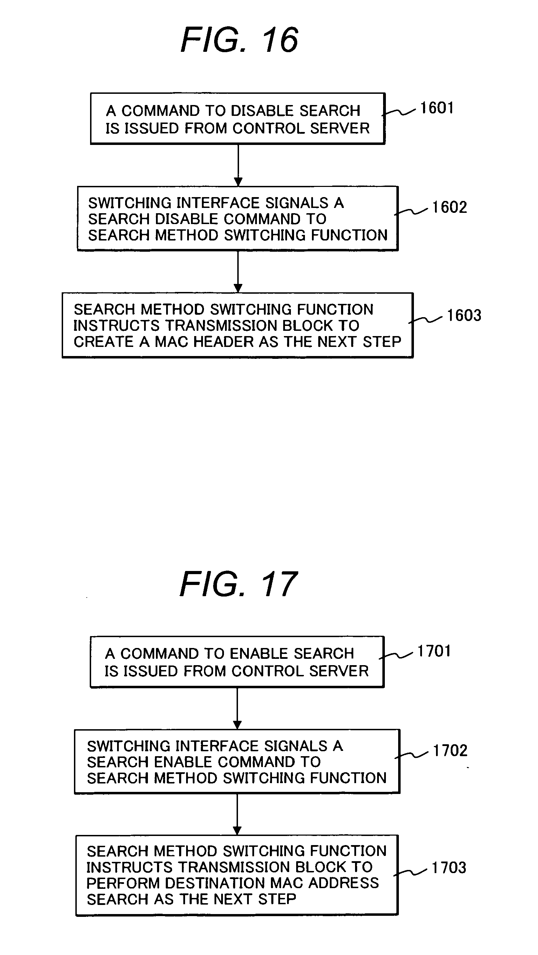

Fig. 13 is a diagram showing a configuration of a physical port of a third embodiment. This is port functionality 1301 as a combination of the typical configuration of Fig. 7 and the configuration of the first embodiment. In Fig. 13, processing routes denoted by solid line arrows are those from the configuration of Fig. 7 and processing routes denoted by double line arrows are those from the configuration of the first embodiment. Respective processing is the same as described with regard to Fig. 7 and Fig. 10. Added to the physical port configuration of Fig. 13 are a switching interface 1302 for receiving a command from the control server omitted from Fig. 13, a search method switching function (unit) 1303 which issues an instruction to the transmission block, and a filter method switching function (unit) 1304 which issues an instruction to the reception block. The switching interface 1302 signals a command received from the control server to the search method switching 1303 and the filter method switching 1304. The search method switching 1303 controls the transmitting bock 702 to enable or disable processing to be carried out on a buffered data frame. Similarly, the filter method switching 1304 controls the reception block 709 to enable or disable processing to be carried out on a buffered data frame. An enable/disable command from the control server depends on whether the physical port is used in bus topology or PtP connection. That is, by adopting the configuration of the present embodiment, both bus topology and PtP connection can be realized in the same node. Details of an enable/disable switching procedure in the present embodiment will be described below with regard to Figs. 16 to 19.

Fig. 16 is a flowchart of a procedure for carrying out search disable setting from the control server in the third embodiment. When a command to disable search is issued from the control server, the switching interface 1302 receives the command (1601). The switching interface 1302 signals a search disable command to the search method switching 1303 (1602). Having received the command, the search method switching 1303 sets the transmit processing to handle all data frames that will subsequently arrive at the transmission block 702 so that MAC header creation 1002 is directly carried out on those frames as the next step (1603).

Fig. 17 is a flowchart of a procedure for carrying out search enable setting from the control server in the third embodiment. When a command to enable search is issued from the control server, the switching interface 1302 receives the command (1701). The switching interface 1302 signals a search enable command to the search method switching 1303 (1702). Having received the command, the search method switching 1303 sets the transmit processing to handle all data frames that will subsequently arrive at the transmission block so that destination MAC address search 703 is carried out on those frames as the next step (1703).

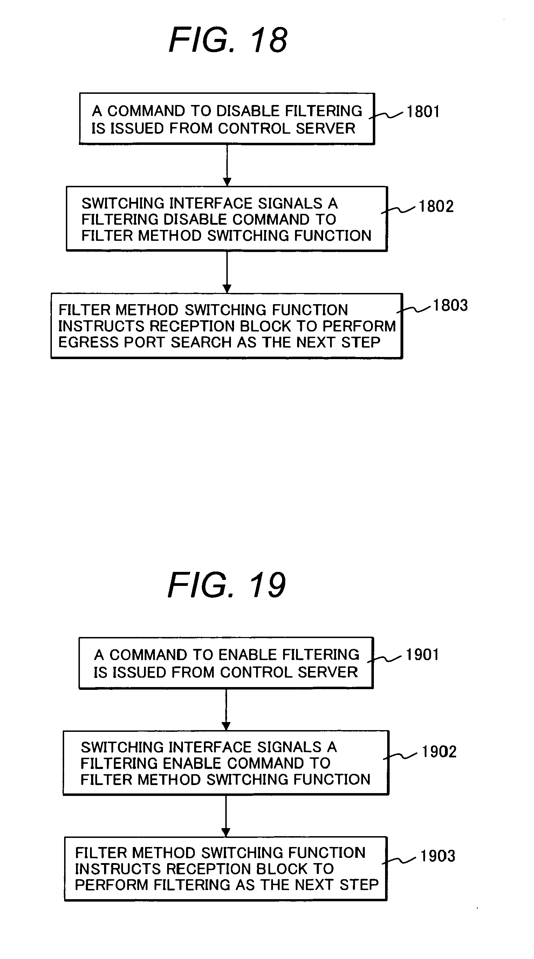

Fig. 18 is a flowchart of a procedure for carrying out filtering disable setting from the control server in the third embodiment. When a command to disable filtering is issued from the control server, the switching interface 1302 receives the command (1801). The switching interface 1302 signals a filtering disable command to the filter method switching 1304 (1802). Having received the command, the filter method switching 1304 sets the receive processing to handle all data frames that will subsequently arrive at the reception block so that egress port search 712 is directly carried out on those frames as the next step (1803).

Fig. 19 is a flowchart of a procedure for carrying out filtering enable setting from the control server in the third embodiment. When a command to enable filtering is issued from the control server, the switching interface 1302 receives the command (1901). The switching interface 1302 signals a filtering enable command to the filter method switching 1304 (1902). Having received the command, the filter method switching 1304 sets the receive processing to handle all data frames that will subsequently arrive at the reception block so that filtering 710 is carried out on those frames as the next step (1903).

According to the present embodiment, it is possible to use the physical port in either bus topology or PtP connection, based on the enable/disable command from the control server.

The port functionality of the combination of the configurations shown in Fig. 7 and Fig. 10 has been described in the present embodiment, but there is no limitation thereto. For example, port functionality of a combination of the configurations shown in Fig. 10 and Fig. 11 is also feasible. In this case, a test frame is transmitted in the configuration of Fig. 11. The receiver learns and stores a first MAC address that could be extracted from the source MAC address field in a data frame received from the destination node as the destination MAC address to be used for transmission. This MAC address may also be used as a fixed MAC address used in the port functionality of the configuration of Fig. 10.

The present invention described in detail hereinbefore can be applied effectively to a network communication node, in particular, a network communication node that transmits and receives data over a PtP connection.

## Claims

1. A network communication node comprising a processor and transmitting and receiving a data frame including a source MAC (Media Access Control) address field and a destination MAC address field,
wherein, when transmitting the data frame received, the processor performs control to copy a fixed value stored beforehand into the destination address field in the data frame and transmit the data frame.

2. The network communication node according to Claim 1,
wherein the processor performs control to transmit a test frame in which a MAC address assigned to the node has been described in the source MAC address field, each time a communication connection with a destination node is initiated or periodically, to the destination node.

3. The network communication node according to Claim 2,
wherein the processor learns and stores a MAC address extracted from the source MAC address field in the test frame received in response to transmission of the test frame as the fixed value to be used for transmission.

4. A network communication node comprising a processor and transmitting and receiving a data frame including a source MAC address field and a destination MAC address field,
wherein, when transmitting the data frame received, the processor performs control to copy the content of the source MAC address field in the data frame to the destination MAC address field in the data frame and transmit the data frame.

5. A network communication node comprising a processor and transmitting and receiving a data frame including a source MAC address field and a destination MAC address field, wherein, when transmitting the data frame received, the processor performs control to set a random value in the destination MAC address field in the data frame and transmit the data frame.

6. A network communication node comprising a plurality of interface (IF) cards connected to a switch and transmitting and receiving a data frame including a source MAC address field and a destination MAC address field,
each of the IF cards comprising a processor, a memory, and a physical port,
wherein, when transmitting the data frame received from the switch, the processor performs switching control for either retrieving a destination MAC address from a MAC address table stored in the memory and creating a MAC header using the retrieved destination MAC address or copying the content of the source MAC address field in the received data frame, a random value, or a fixed value which has been set beforehand to the destination MAC address field and creating the MAC header.

7. The network communication node according to Claim 6,
wherein, upon receiving the data frame, the processor performs switching control as to whether or not the MAC address in the source MAC address field is learned and stored into the MAC address table.

8. The network communication node according to Claim 6,
wherein the processor performs the switching control in accordance with control from outside the node.

9. The network communication node according to Claim 7,
wherein the processor performs the switching control as to whether or not the MAC address is stored into the MAC address table in accordance with control from outside the node.

10. The network communication node according to Claim 6,
wherein the processor performs control to describe a MAC address pre-assigned to the node in the source MAC address field in the data frame and transmit the data frame.

11. The network communication node according to Claim 7,
wherein, upon receiving the data frame, the processor determines whether or not the MAC address in the source MAC address field is learned and stored into the MAC address table, based on a result of comparison between the MAC address in the destination MAC address field in the received data frame and the MAC address assigned to the node.

12. The network communication node according to Claim 7,
wherein the processor transmits a test frame in which a MAC address assigned to the node has been described in the source MAC address field to a destination node and stores a first MAC address that could be extracted from the source MAC address field in a data frame received from the destination node as a destination MAC address to be used for transmission.

13. The network communication node according to Claim 12,
wherein connection with the destination node through the IF card is a point-to-point (PtP) connection.
